# FASCICULE DE BREVET EUROPEEN

(11) **EP 1 918 606 B1**
(45) Date de publication et mention de la délivrance du brevet: **05.10.2011**
(21) Numéro de dépôt: 07118117.6
(22) Date de dépôt: 09.10.2007
(51) Int. Cl.: F16D 65/20, F16D 65/14, F16J 15/16

(54) **Frein à disque**
Scheibenbremse
Disc brake

(30) Priorité: 02.11.2006 FR 0609686
(43) Date de publication de la demande: 07.05.2008
(73) Titulaire: ROBERT BOSCH GMBH, 70442 Stuttgart (DE)
(72) Inventeur: Kubic, Olivier, 91400 Orsay (FR); Lemoine, Eric, 92600 Asnière (FR)
(74) Mandataire: Hurwic, Aleksander Wiktor

(56) Documents cités:
- DE-A1- 3 247 052
- FR-A- 2 182 284
- GB-A- 2 129 878
- US-A- 4 053 030

## Description

L'invention concerne un frein à disque, en particulier pour véhicule automobile.

Un frein à disque comporte deux patins placés de part et d'autre d'un disque solidaire en rotation d'une roue d'un véhicule et serrés sur les faces du disque pour développer un couple de freinage par une pression hydraulique développée dans un circuit de freinage commandé par le conducteur agissant sur une pédale de frein.

En général, les patins sont guidés par un étrier qui est lié par un montage coulissant suivant l'axe de rotation du disque à une chape fixe. L'étrier comporte un cylindre borgne dans lequel un piston recevant la pression hydraulique du circuit de freinage est poussé en appui sur le dos d'un patin. Le montage coulissant de l'étrier permet de répartir également les forces de freinage sur les deux patins.

Un joint annulaire à section rectangulaire est ajusté dans une gorge du cylindre et comporte une face maintenue en pression sur le piston pour réaliser une étanchéité au fluide hydraulique agissant sur le piston.

La largeur de la gorge est supérieure à celle du joint de manière à laisser un jeu axial entre le joint et la gorge pour faciliter le montage et permettre d'absorber des variations dimensionnelles venant par exemple de la compression du joint, des tolérances de fabrication, ou d'un gonflement du joint dû à l'échauffement ou à son imprégnation par le liquide présent.

Dans une réalisation connue, la gorge a en section une forme qui s'élargit en direction de l'axe pour bloquer autant que possible la partie périphérique extérieure du point tout en permettant à sa partie périphérique interne de se déplacer axialement en suivant le piston. Ainsi, pour un petit déplacement du piston réalisé lors d'un freinage, sur une course par exemple de l'ordre de 0,5 millimètre, la face du joint en contact avec le piston est entraînée par frottement sur le piston et le joint subit une déformation élastique.

Lorsque le conducteur relâche son action sur la pédale de frein, le joint reprenant sa forme entraîne le piston qui est rappelé en arrière ce qui permet de décoller les patins du disque et ainsi d'éviter un freinage résiduel provoquant une usure des garnitures de friction.

Cependant les coefficients de frottement du joint sur le piston et sur le fond de la gorge sont difficiles à maîtriser et le fonctionnement peut différer dans certains cas. Notamment lors d'un rappel du piston sur une course plus importante, par exemple sous l'action d'une poussée du disque subissant des efforts latéraux dans un virage, le joint peut se déplacer axialement dans sa gorge et reculer avec le piston dans la limite du jeu axial.

Le fonctionnement du système est alors perturbé, lors du freinage suivant le joint se déplace avec le piston et n'assure plus la fonction de rappel élastique et la sensation à la pédale peut être modifiée ce qui est désagréable pour le conducteur.

Le document FR 2182284 A montre un frein à disque avec des fonctions de rappel et d'anti-recule de l'ensemble joint-gorge.

L'invention a notamment pour but d'éviter ces inconvénients au moyen d'une solution simple, efficace et économique permettant de maîtriser la position du joint dans la gorge.

Elle propose à cet effet un frein à disque comprenant un vérin hydraulique de serrage de patins guidés par un étrier et un joint annulaire logé avec un jeu axial dans une gorge du cylindre du vérin pour assurer une étanchéité entre le piston du vérin et le cylindre, caractérisé en ce qu'il comprend un moyen de blocage axial du joint dans la gorge, ce moyen bloquant le joint vers l'arrière et permettant son déplacement vers l'avant en direction du disque de frein.

Un avantage du frein selon l'invention est qu'il permet un montage aisé du joint grâce à la présence du jeu axial tout en permettant un fonctionnement constant grâce à l'immobilisation axiale du joint.

Selon un mode de réalisation préféré de l'invention, le moyen de blocage axial est une saillie annulaire continue réalisée dans le fond de la gorge.

Selon un mode particulier de réalisation, la saillie annulaire est une nervure formant une pointe tournée vers l'avant et pénétrant dans la matière élastique comprimée du joint.

Selon un autre mode particulier de réalisation, la saillie annulaire est un décrochement reliant une partie avant du fond de la gorge ayant un diamètre supérieur et une partie arrière ayant un diamètre inférieur.

Le fond de la gorge peut comprendre suivant l'axe successivement plusieurs saillies annulaires assurant le blocage du joint.

Ces saillies annulaires peuvent être formées d'une succession régulière de crans ayant chacun une pointe tournée vers l'avant.

L'invention sera mieux comprise et d'autres caractéristiques et avantages apparaîtront plus clairement à la lecture de la description ci-après donnée à titre d'exemple en référence aux dessins annexés dans lesquels :
- les figures 1 a et 1 b représentent une vue en coupe d'un joint annulaire monté dans une gorge selon l'art antérieur, dans deux positions;
- les figures 2a et 2b représentent une vue en coupe d'un joint annulaire monté dans une gorge selon l'invention ;
- les figures 3a et 3b représentent une variante de réalisation ;
- la figure 4 représente des courbes d'effort d'enfoncement d'un piston.

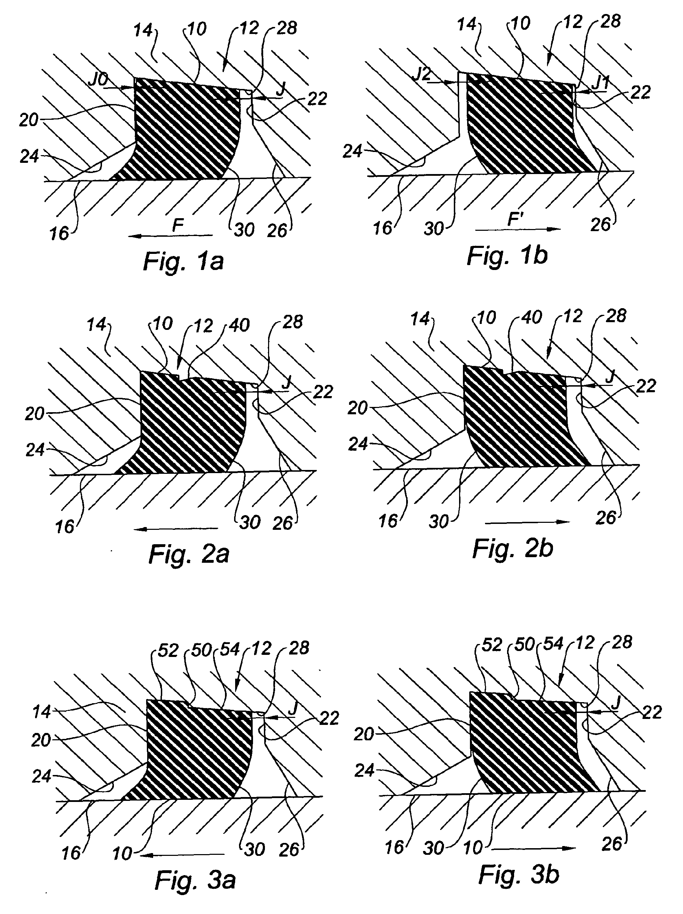

Les figures 1a et 1b représentent dans deux positions différentes un joint 10 vu en coupe suivant un plan passant par l'axe du cylindre d'un vérin d'un étrier de freinage 14. Le joint 10 a en section une forme globalement rectangulaire et est inséré dans une gorge 12 de section complémentaire réalisée dans un alésage de l'étrier 14 formant un cylindre de guidage pour un piston 16.

La gorge 12 comporte des faces latérales avant 20, et arrière 22 situées axialement de part et d'autre du joint 10 pour réaliser son guidage et son maintien en position, la face avant 20 étant du côté du disque, la face arrière 22 étant du côté opposé au disque. Dans la position de la figure 1a, un jeu latéral J est formé entre le joint 10 et la face arrière 22.

Le joint 10 prend appui sur le fond de la gorge 28 pour exercer par sa face tournée vers l'axe du cylindre une pression sur le piston 16 coulissant axialement, ce qui assure l'étanchéité au fluide hydraulique de commande.

La face avant 20 comporte à l'entrée de la gorge un chanfrein annulaire 24 qui laisse un dégagement entre l'étrier 14 et le piston 16, un autre chanfrein 26 étant formé dans la face arrière 22.

La flèche F en figure 1a indique le sens du déplacement du piston 16 pour le serrage des patins sur le disque sous l'action d'une pression hydraulique commandée par le conducteur. La partie 30 du joint 10 en appui sur le piston 16 est entraînée vers l'avant sur le piston en se déformant axialement et pénètre dans le dégagement formé par le chanfrein 24. Le joint est retenu par la face avant 20 de la gorge 12, un petit jeu J0 dû à un léger basculement du joint pouvant apparaître le long de la face avant 20.

La course du piston 16 lors d'un freinage normal est comprise généralement entre 0,2 et 0,5 millimètre et permet de rattraper les jeux entre les patins et le disque et d'absorber les élasticités des différents éléments. Lorsque le conducteur relâche la pression, le joint 10 se redresse et entraîne en arrière le piston 16 qui est ramené en position de départ dans le sens de la flèche F'.

Le fond de la gorge 28 est tronconique et légèrement incliné par rapport à l'axe en s'en éloignant du coté avant du vérin. Cette pente de l'ordre de 7° facilite un maintien du joint 10 en appui sur la face avant 20, le joint étant moins comprimé de ce côté.

De plus, les dimensions du joint sont conçues de manière à ce que la pression soit plus forte sur le fond de gorge 28 que sur le piston 16, de manière à favoriser le glissement du joint sur ce dernier plutôt que sur le fond de la gorge.

Dans certaines conditions de fonctionnement, par exemple lors d'un petit déplacement axial du disque dû à des forces latérales s'exerçant sur le véhicule dans les virages, le piston 16 peut être poussé vers l'arrière par le disque, la partie 30 du joint 10 en contact avec le piston 16 se déformant vers l'arrière et pénétrant dans l'espace formé par le chanfrein 26 comme représenté en figure 1 b.

Les coefficients de frottement du joint sur le fond de la gorge et sur le piston sont difficilement maîtrisables et malgré les précautions prises pour maintenir le joint en place, le piston 16 peut entraîner vers l'arrière le joint 10 qui se décolle de la face avant 20 avec formation d'un jeu J2, le jeu arrière J diminuant pour devenir J1.

Le fonctionnement lors des freinages suivants est alors perturbé, l'ensemble du joint 10 se déplaçant vers l'avant au freinage de sorte que le rappel en arrière du piston s'exerce mal et peut induire un frottement résiduel du patin sur le disque. De plus, les sensations à la pédale peuvent aussi être modifiées ce qui est inconfortable pour le conducteur.

Les figures 2a et 2b représentent un premier dispositif de blocage axial selon l'invention, le piston 16 étant en position avant et en position arrière respectivement. Le fond 28 de la gorge 12 comporte une nervure annulaire 40 de section constante, continue autour de l'axe du piston 16, et qui comporte du côté avant une face radiale et du côté arrière une face tronconique avec une faible pente.

Cette nervure comporte une arête de sommet formant une pointe tournée vers l'avant et pénétrant dans la matière élastique du joint 10 comprimée dans le fond de la gorge, cette pointe étant orientée de manière à ce que le joint puisse avancer par glissement vers l'avant du vérin sans pouvoir reculer, à la manière d'un rochet. Cela permet, lors des premières manoeuvres du frein après assemblage de l'ensemble, au joint 10 de venir se plaquer sur la face avant 20 de la gorge et empêche le recul du joint par la suite.

Le joint 10 travaille alors dans de bonnes conditions, il ne peut se déplacer et le jeu J reste constant, il se déforme de manière élastique en suivant les déplacements du piston 16 pour les petits mouvements et assure un rappel efficace du piston.

En variante, on pourrait réaliser plusieurs nervures annulaires successives régulièrement espacées suivant l'axe pour réaliser un meilleur accrochage du joint.

Les figures 3a et 3b montrent un deuxième dispositif de blocage axial selon l'invention. Le fond 28 de la gorge 12 comporte un décrochement 50 annulaire et continu comprenant une face annulaire radiale sensiblement plane qui relie une partie avant 52 du fond de la gorge ayant un diamètre supérieur et une partie arrière 54 ayant un diamètre inférieur.

Ce décrochement 50 comporte une arête de sommet qui pénètre dans la matière élastique du joint 10 et qui comme pour le premier dispositif est orientée de manière à permettre un déplacement du joint 10 vers la face avant 20.

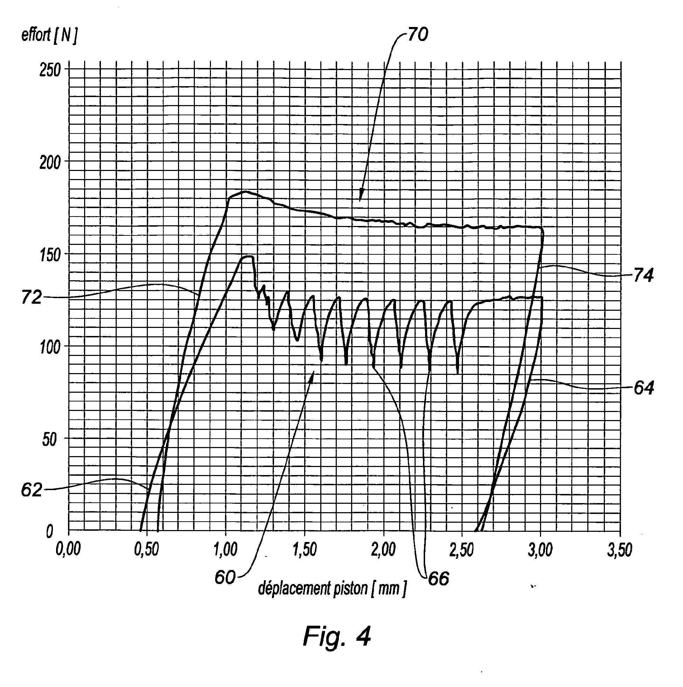

La figure 4 représente des courbes d'effort de déplacement d'un piston 16, avec en abscisses le déplacement du piston en millimètres et en ordonnées l'effort appliqué sur ce piston en Newtons. La courbe 60 correspond à l'art antérieur et la courbe 70 à un dispositif selon l'invention.

La courbe 60 comprend une première partie ascendante 62 représentant la déformation élastique régulière du joint lors de la montée en pression, sur une course d'environ 0,5 millimètre, puis une série de pics 66 sur une course d'environ 2 millimètres et sur une variation brutale de l'effort d'environ 40 Newtons, le déplacement du joint dans la gorge se réalisant avec une succession de décrochages et d'accrochages créant un broutement. La courbe 60 comporte ensuite une partie plate dans laquelle le joint est en appui sur la face avant de la gorge et le piston coulisse normalement dans le joint.

Ensuite, à la fin du freinage, l'effort s'annule en 64 et le joint se redresse entraînant un recul du piston sur une course de rappel d'environ 0,4 millimètre.

La courbe 70 comprend une première partie ascendante 72 correspondant à la déformation élastique du joint de manière régulière lors de la montée en pression, sur une course d'environ 0,5 millimètres. Puis la courbe devient globalement plate sur une course d'environ 2 millimètres, le piston coulissant normalement par rapport au joint sans à-coups.

A la fin du freinage, l'effort s'annule en 74 et le joint se redresse en provoquant un recul du piston sur 0,4 millimètre environ.

Dans une variante de réalisation, on pourrait former une ou des nervures en saillie sur la face du joint qui est en appui sur le fond de la gorge, et une ou des rainures correspondantes dans le fond de la gorge, pour assurer le blocage axial du joint dans la gorge.

## Revendications

1. Frein à disque, en particulier pour véhicule automobile, comprenant des patins guidés par un étrier (14), et un joint annulaire (10) logé avec un jeu axial J dans une gorge (28) d'un cylindre d'un vérin de freinage pour assurer une étanchéité entre le piston (16) du vérin et le cylindre, **caractérisé en ce qu'**il comprend un moyen de blocage axial (40, 50) du joint (10) dans la gorge (28), ce moyen bloquant le joint vers l'arrière et permettant son déplacement vers l'avant en direction du disque de frein.

2. Frein à disque selon la revendication 1, **caractérisé en ce que** le moyen de blocage axial (40, 50) comprend une nervure annulaire réalisée en saillie sur le fond de la gorge (28).

3. Frein à disque selon la revendication 2 , **caractérisé en ce que** la nervure annulaire (40) comporte une arête de sommet tournée vers l'avant et pénétrant dans la matière du joint (10).

4. Frein à disque selon la revendication 2 ou 3, **caractérisé en ce que** la nervure annulaire est formée par un décrochement (50) reliant une partie avant du fond de la gorge ayant un diamètre supérieur (52) et une partie arrière (54) ayant un diamètre inférieur (54).

5. Frein à disque selon l'une des revendications 1 à 4, **caractérisé en ce que** le fond de la gorge (28) comprend plusieurs nervures annulaires de blocage du joint (10).

6. Frein à disque selon l'une des revendications 1 à 5, **caractérisé en ce que** le fond de la gorge (28) est une surface tronconique dont le diamètre autour de l'axe augmente en direction du disque de frein.

## Claims

1. Disk brake, in particular for a motor vehicle, comprising shoes guided by a calliper (14) and an annular seal (10) lodged with axial clearance J in a groove (28) of a cylinder of a brake actuator in order to ensure fluid-tightness between the piston (16) of the actuator and the cylinder, **characterized in that** it comprises a means (40, 50) of axially locking the seal (10) in the groove (28), this means locking the seal in the rearward direction and allowing its forward movement in the direction of the brake disk.

2. Disk brake according to Claim 1, **characterized in that** the axial locking means (40, 50) comprises an annular rib protruding from the bottom of the groove (28).

3. Disk brake according to Claim 2, **characterized in that** the annular rib (40) comprises a peak edge facing forwards and penetrating into the material of the seal (10).

4. Disk brake according to Claim 2 or 3, **characterized in that** the annular rib is formed by a step (50) connecting a front part of the groove having a bigger diameter (52) and a rear part (54) having a smaller diameter (54).

5. Disk brake according to one of Claims 1 to 4, **characterized in that** the bottom of the groove (28) comprises several annular ribs for locking the seal (10).

6. Disk brake according to one of Claims 1 to 5, **characterized in that** the bottom of the groove (28) is a frustroconical surface whose diameter about the axis increases towards the disk brake.

## Patentansprüche

1. Scheibenbremse, insbesondere für ein Kraftfahrzeug, umfassend durch einen Sattel (14) geführte Beläge und eine Ringdichtung (10), die mit einem Axialspiel J in einer Nut (28) eines Rohrzylinders eines Zylinders eines Bremsaktuators untergebracht ist, um eine Dichtheit zwischen dem Kolben (16) des Aktuators und dem Zylinder zu gewährleisten, **dadurch gekennzeichnet, dass** sie ein Mittel (40, 50) zum axialen Blockieren der Dichtung (10) in der Nut (28) umfasst, wobei dieses Mittel die Dichtung nach hinten blockiert und ihr Verschieben nach vorne in Richtung der Bremsscheibe gestattet.

2. Bremsscheibe nach Anspruch 1, **dadurch gekennzeichnet, dass** das Mittel (40, 50) zum axialen Blockieren einen ringförmigen Steg umfasst, der vorspringend auf dem Grund der Nut (28) ausgeführt ist.

3. Bremsscheibe nach Anspruch 2, **dadurch gekennzeichnet, dass** der ringförmige Steg (40) eine Scheitelkante aufweist, die nach vorne weist und in das Material der Dichtung (10) eindringt.

4. Bremsscheibe nach Anspruch 2 oder 3, **dadurch gekennzeichnet, dass** der ringförmige Steg durch einen Absatz (50) gebildet wird, der einen vorderen Teil des Grunds der Nut mit einem größeren Durchmesser (52) und einen hinteren Teil (54) mit einem kleineren Durchmesser (54) verbindet.

5. Bremsscheibe nach einem der Ansprüche 1 bis 4, **dadurch gekennzeichnet, dass** der Grund der Nut (28) mehrere ringförmige Stege zum Blockieren der Dichtung (10) umfasst.

6. Bremsscheibe nach einem der Ansprüche 1 bis 5, **dadurch gekennzeichnet, dass** der Grund der Nut (28) eine kegelstumpfförmige Fläche ist, deren Durchmesser um die Achse in Richtung der Bremsscheibe zunimmt.
